# EUROPÄISCHE PATENTANMELDUNG

(11) **EP 3 888 878 A1**
(43) Veröffentlichungstag der Anmeldung: **06.10.2021**
(21) Anmeldenummer: 21163582.6
(22) Anmeldetag: 19.03.2021
(51) Int. Cl.: B29C 48/00, B29C 48/11, E06B 3/30, E06B 3/22

(54) **EXTRUSIONSPROFIL FÜR EIN TÜR- UND/ODER FENSTERTEIL SOWIE HERSTELLUNGSVERFAHREN**

(30) Priorität: 27.03.2020 DE 102020108599
(71) Anmelder: Salamander Industrie-Produkte GmbH, 86842 Türkheim (DE)
(72) Erfinder: Schmiedeknecht, Till, 80992 München (DE)
(74) Vertreter: Schmid, Nils T.F.

(57) **Zusammenfassung**

Die vorliegende Erfindung betrifft ein Extrusionsprofil (1), insbesondere ein Koextrusionsprofil oder ein Monoextrusionsprofil, für ein Fenster- und/oder Türteil, insbesondere ein Fenster- und/oder Türrahmenteil oder ein Fenster- und/oder Türflügelteil, wobei wenigstens eine, eine Außenseite des Extrusionsprofils (1) bildende Profiloberfläche (2) aus einem Gemisch hergestellt ist, wobei das Gemisch Kunststoff und mindestens eine pigmentierte Zellulose oder mindestens einen Mineralstoff umfasst, und wobei die mindestens eine pigmentierte Zellulose oder der mindestens eine Mineralstoff einen Masseanteil zwischen 1.0 Gew.-% und 15.0 Gew.-% des Gemisches, insbesondere zwischen 2.0 Gew.-% und 10.0 Gew.-% des Gemisches, aufweist.

## Beschreibung

Die vorliegende Erfindung betrifft ein Extrusionsprofil, wie ein Mono- oder ein Koextrusionsprofil, für ein Fenster- und/oder Türteil, insbesondere ein Fenster- und/oder Türrahmenteil oder ein Fenster- und/oder Türflügelteil, sowie ein Verfahren zum Herstellen eines derartigen Profils.

Es ist im Stand der Technik bereits bekannt, Kunststoff-Fensterrahmenprofilen eine spezifische Optik zu verleihen. Dabei kommen beispielsweise aufkaschierte Folien, die die gewünschte Optik besitzen, oder aufgeclipste Rahmenblenden, insbesondere aus Aluminium, zum Einsatz.

Ferner geht aus DE 20 2006 007 797 U1 ein Kunststoff-Fensterrahmenprofil hervor, welches eine holzähnliche Optik aufweisen soll. Um die Holz-Optik zu erreichen, wird eine Polymermischung aus PVC und Farbmitteln extrudiert. Anschließend muss die Außenseite des Profils unter Abtrag von Material gebürstet werden und schließlich mit einer härtenden Oberflächenbeschichtung versiegelt werden.

Zum einen ist die Optik der Kunststoff-Fensterrahmenprofile gemäß DE 20 2006 007 797 U1 auf Holz beschränkt. Zum anderen ist das Herstellungsverfahren der Profile sehr aufwändig, insbesondere da zusätzliche mechanische Nachbearbeitungsschritte nach der Extrusion und ferner ein zusätzlicher Versiegelungsschritt erforderlich sind, um das Profil mit der gewünschten Optik herzustellen. Kunststoffmaterialien, welche im Stand der Technik für Fenster- und/oder Türteile verwendet werden, weisen zudem den Nachteil auf, dass Ihnen eine umweltverträgliche und CO₂-neutrale Optik, also beispielsweise die Optik eines Kunststoff-Recyclingmaterials, fehlt. Als Kunststoff-Recyclingmaterial werden im Sinne der vorliegenden Erfindung unter anderem alte, bereits verbaute Kunststoffrahmen, die nach dem Einsatz wiederverwertet werden, und Kunststoff-Ausschussmaterial, welches beispielsweise im Rahmen des Verarbeitungsprozesses anfällt, verstanden.

Es ist Aufgabe der vorliegenden Erfindung, die Nachteile aus dem bekannten Stand der Technik zu überwinden, insbesondere ein Kunststoff-Extrusionsprofil mit gewünschter Optik, insbesondere betonartiger Optik und/oder der Optik eines Kunststoff-Recyclingmaterials, bereitzustellen, das einfach herzustellen ist.

Diese Aufgabe wird durch die Gegenstände der unabhängigen Ansprüche gelöst.

Die vorstehende Aufgabe wird in einem ersten Aspekt gelöst, indem ein Extrusionsprofil, insbesondere ein Koextrusionsprofil oder ein Monoextrusionsprofil, für ein Tür- und/oder Fensterteil, beispielsweise ein Tür- und/oder Fensterrahmenteil oder ein Tür- und/oder Fensterflügelteil, bereitgestellt wird, wobei wenigstens eine, eine Außenseite des Extrusionsprofils bildende Profiloberfläche aus einem Gemisch hergestellt ist, wobei das Gemisch Kunststoff und mindestens eine pigmentierte Zellulose oder mindestens einen Mineralstoff umfasst, und wobei die mindestens eine pigmentierte Zellulose oder der mindestens eine Mineralstoff einen Masseanteil zwischen 1.0 Gew.-% und 15.0 Gew.-% des Gemisches aufweist, insbesondere zwischen 2.0 Gew.-% und 10.0 Gew.-% des Gemisches aufweist. Das Extrusionsprofil kann beispielsweise wenigstens abschnittsweise ein Tür- und/oder Fensterteil bilden, wie beispielsweise einen Holm, wie einen Vertikalholm oder einen Horizontalholm, entweder eines feststehenden Tür- und/oder Fensterrahmenteils oder eines bewegbaren, insbesondere verschiebbaren und/oder verschwenkbaren, Tür- und/oder Fensterflügelteils. Das Extrusionsprofil kann ein zunächst durch Extrusion hergestelltes Extrusionshalbzeug umfassen, das entlang der Extrusionsrichtung einen im Wesentlichen identischen Querschnitt sowie eine im Wesentlichen identische Außenabmessung besitzt.

Es wurde herausgefunden, dass Kunststoff-Recyclingmaterial den Vorteil aufweist, besonders umweltverträglich und CO2-neutral zu sein. Dahingegen fehlen anderen Kunststoffmaterialien eine umweltverträgliche und CO₂-neutrale Optik, also beispielsweise die Optik eines Kunststoff-Recyclingmaterials. Extrusionsprofile für Fenster- und/oder Türteile, die im Stand der Technik bekannt sind, weisen den Nachteil auf, dass nach außen sichtbare Profilflächen die Optik eines umweltverträglichen Kunststoff-Recyclingmaterials nicht aufweisen. Daher besteht grundsätzlich ein Interessenskonflikt zwischen einerseits dem Wunsch, ein Extrusionsprofil für ein Fenster- und/oder Türteil bereitzustellen, welches aus Kunststoffmaterial hergestellt ist, und andererseits der Bereitstellung eines Extrusionsprofils für ein Fenster- und/oder Türteil, welches zumindest an den Sichtflächen des Profils eine umweltverträgliche und CO₂-neutrale Optik, also beispielsweise die Optik eines Kunststoff-Recyclingmaterials, aufweist.

Durch die erfindungsgemäßen Maßnahmen, nämlich die Herstellung der wenigstens einen, eine Außenseite des Extrusionsprofils bildenden Profiloberfläche aus einem Gemisch, wobei das Gemisch Kunststoff und mindestens eine pigmentierte Zellulose oder mindestens einen Mineralstoff umfasst, und wobei die mindestens eine pigmentierte Zellulose oder der mindestens eine Mineralstoff einen Masseanteil zwischen 1.0 Gew.-% und 15.0 Gew.-% des Gemisches, insbesondere zwischen 2.0 Gew.-% und 10.0 Gew.-% des Gemisches, aufweist, kann dieser Interessenskonflikt auf wirtschaftliche Weise zuverlässig gelöst werden. Durch die erfindungsgemäßen Maßnahmen wird somit ein Extrusionsprofil für ein Fenster- und/oder Türteil, insbesondere ein Fenster- und/oder Türrahmenteil oder ein Fenster- und/oder Türflügelteil, aus Kunststoff bereitgestellt, wobei wenigstens eine, eine Außenseite des Extrusionsprofils bildende Profiloberfläche die besonders erwünschte umweltverträgliche und CO₂-neutrale Optik, also die Optik eines Kunststoff-Recyclingmaterials, aufweist.

Die Herstellung des erfindungsgemäßen Extrusionsprofils erfolgt durch ein Mono- oder ein Koextrusionsverfahren, bei dem die Verwendung der mindestens einen pigmentierten Zellulose oder des mindestens einen Mineralstoffs auf eine einzige Schicht der wenigstens einen, eine Außenseite des Extrusionsprofils bildende Profiloberfläche, begrenzt werden kann. Auf die einzelnen Schritte des Herstellungsverfahrens wird später im Detail eingegangen. Im Sinne dieser Erfindung soll der Begriff "Monooextrusionsprofil" als ein durch Monoextrusion hergestelltes Profil verstanden. Der Begriff "Koextrusionsprofil" soll als ein durch Koextrusion hergestelltes Profil verstanden werden. Koextrusion bezeichnet das Zusammenführen von zwei artgleichen oder unterschiedlichen Kunststoffschmelzen vor dem Verlassen des Extrusionswerkzeuges (Düse), wobei die beiden Kunststoffschmelzen von zwei separaten Extrusionsanlagen erzeugt und im Extrusionswerkzeug (Düse) zu einem Werkstück zusammengeführt werden. Erfindungsgemäß werden die beiden Kunststoffschmelzen vorliegend in einem Extrusionsprofil zusammengeführt.

Die Schicht der mindestens einen pigmentierten Zellulose oder des mindestens einen Mineralstoffs befindet sich vorzugsweise auf der Sichtfläche des Profils. Besonders bevorzugt wird eine Schicht der mindestens einen pigmentierten Zellulose oder des mindestens einen Mineralstoffs auf der Sichtfläche des Extrusionsprofils aufgebracht, wobei eine geringere Menge der mindestens einen pigmentierten Zellulose oder des mindestens einen Mineralstoffs benötigt wird. Hierdurch können die Kosten zur Herstellung eines erfindungsgemäßen Extrusionsprofils reduziert werden.

Generell kann die Zugabe von Stoffen wie beispielsweise mindestens einer pigmentierten Zellulose oder mindestens eines Mineralstoffs zu einem Profil die Festigkeit des Profils reduzieren. Daher erfolgt erfindungsgemäß die Herstellung des Extrusionsprofils vorzugsweise über ein Koextrusionsverfahren, da mittels eines Koextrusionsverfahrens auch bei Verwendung von Zusatzstoffen die Eckfestigkeit des Extrusionsprofils ausreichend gewährleistet werden kann. Durch das Koextrusionsverfahren wird die Anbringung einer dünnen Schicht der mindestens einen pigmentierten Zellulose oder des mindestens einen Mineralstoffs ermöglicht. Es ist von großem Vorteil für diese Erfindung, dass durch die Anbringung einer dünnen Schicht der mindestens einen pigmentierten Zellulose oder des mindestens einen Mineralstoffs, die Zugabe der mindestens einen pigmentierten Zellulose oder des mindestens einen Mineralstoffs keinen merkenswerten festigkeitsreduzierenden Einfluss auf das Profil hat, da die Zugabe auf einzig eine sehr dünne Schicht reduziert werden kann. Daher weisen die erfindungsgemäß hergestellten Profile eine ausreichende Festigkeit sowohl im Schweißbereich, als auch eine ausreichende Festigkeit gegen Stoß und Bruch, auf.

Die wenigstens eine, eine Außenseite des Extrusionsprofils bildende Profiloberfläche des Extrusionsprofils für ein Tür- und/oder Fensterrahmenteil, wird vorzugsweise aus einem Gemisch umfassend Kunststoff und mindestens einer pigmentierten Zellulose oder umfassend Kunststoff und mindestens einem Mineralstoff hergestellt.

Der Begriff "mindestens ein" soll im Sinne dieser Erfindung als zumindest ein einziger Stoff oder ein einziges Molekül, oder 2, 3, 4, 5, 6, 7, 8, 9, 10, 11, 12, 13, 14, 15, 16, 17, 18, 19, 20, oder jede beliebige Anzahl an Stoffen oder Molekülen verstanden werden. So soll beispielsweise der Begriff "mindestens eine pigmentierte Zellulose" im Sinne dieser Erfindung als zumindest eine pigmentierte Zellulose, oder 2, 3, 4, 5, 6, 7, 8, 9, 10, 11, 12, 13, 14, 15, 16, 17, 18, 19, 20, oder jede beliebige Anzahl an pigmentierten Zellulosen verstanden werden. Weiterhin soll beispielsweise der Begriff "mindestens ein Mineralstoff" im Sinne dieser Erfindung als zumindest ein Mineralstoff, oder 2, 3, 4, 5, 6, 7, 8, 9, 10, 11, 12, 13, 14, 15, 16, 17, 18, 19, 20, oder jede beliebige Anzahl an Mineralstoffen verstanden werden. Darüber hinaus umfasst der Begriff "mindestens ein" im Sinne dieser Erfindung eine beliebig große Anzahl an Stoffen oder Molekülen, die vorzugsweise innerhalb einer Schicht oder auf einer Fläche gleichmäßig verteilt sind. Im Sinne dieser Erfindung soll der Begriff "mindestens ein" jedoch auch eine beliebig große Anzahl an Stoffen oder Molekülen umfassen, die innerhalb einer Schicht oder auf einer Fläche ungleichmäßig verteilt sind.

In einer bevorzugten Ausführungsform ist die pigmentierte Zellulose ein pigmentiertes Zellulosegemisch, welches Zellulose und mindestens ein Pigment umfasst. In einer besonders bevorzugten Ausführungsform weist die pigmentierte Zellulose, welche zumindest Zellulose und mindestens ein Pigment umfasst, einen Masseanteil zwischen 1 Gew.-% und 10 Gew.-% des Gemisches, insbesondere zwischen 3 Gew.-% und 7 Gew.-% des Gemisches, zwischen 4 Gew.-% und 6 Gew.-% des Gemisches oder etwa 5 Gew.-% des Gemisches auf. Im Sinne dieser Erfindung umfasst der Begriff "mindestens eine pigmentierte Zellulose" auch eine Kombination an unterschiedlichen pigmentierten Zellulosen. Der Begriff "mindestens eine pigmentierte Zellulose" im Sinne dieser Erfindung kann also neben einer einzelnen pigmentierte Zellulose auch 2, 3, 4, 5, 6, 7, 8, 9, 10, 11, 12, 13, 14, 15, 16, 17, 18, 19, 20, oder jede beliebige Anzahl an verschiedenen pigmentierten Zellulosen umfassen. So können sich die erfindungsgemäß verwendeten pigmentierten Zellulosen beispielsweise durch die Kombination aus Zellulose und unterschiedlichen Pigmenten unterscheiden.

Im Sinne dieser Erfindung wird der Begriff "etwa" verwendet, um eine gewisse Mengentoleranz anzudeuten. "Etwa" bezeichnet erfindungsgemäß ± 10.0%, oder ± 5.0%, oder ± 1.0%, oder ± 0.5%, oder ± 0.1%.

In einer weiteren bevorzugten Ausführungsform wird der Mineralstoff des Gemisches ausgewählt aus Magnesiumsilikat, Aluminiummagnesiumsilikat, Kaliumaluminiumsilikat, Mica, MicaCelia, Graphit, Schiefer und/oder Glasfaser, insbesondere wobei der Mineralstoff Magnesiumsilikat ist. Im Sinne dieser Erfindung umfasst der Begriff "mindestens ein Mineralstoff" auch eine Kombination der bevorzugten Mineralstoffe. Der Begriff "mindestens ein Mineralstoff" im Sinne dieser Erfindung kann also neben einem einzelnen Mineralstoff auch 2, 3, 4, 5, 6, 7, 8, 9, 10, 11, 12, 13, 14, 15, 16, 17, 18, 19, 20, oder jede beliebige Anzahl an verschiedenen Mineralstoffen umfassen. Mica im Sinne dieser Erfindung soll vorzugsweise Magnesiumsilikat bezeichnen.

In einer bevorzugten Ausführungsform weist der Mineralstoff des Gemisches einen Masseanteil zwischen 1.0 Gew.-% und 10.0 Gew.-% des Gemisches, insbesondere zwischen 2.0 Gew.-% und 5.0 Gew.-% des Gemisches oder etwa 2.5 Gew.-% des Gemisches, auf.

In einer zusätzlich bevorzugten Ausführungsform wird die wenigstens eine, eine Außenseite des Extrusionsprofils bildende Profiloberfläche des Extrusionsprofils für ein Tür- und/oder Fensterrahmenteil, aus einem Gemisch umfassend Kunststoff und mindestens einem Mineralstoff hergestellt. In einer weiteren beispielhaften Ausführungsform umfasst das Gemisch neben dem Kunststoff und dem mindestens einen Mineralstoff zusätzlich mindestens ein Pigment.

In einer darüber hinaus bevorzugten Ausführungsform weist der Mineralstoff und das mindestens eine Pigment des Gemisches einen Masseanteil zwischen 1.0 Gew.-% und 10.0 Gew.-% des Gemisches auf, insbesondere zwischen 2.0 Gew.-% und 5.0 Gew.-% des Gemisches oder etwa 2.5 Gew.-% des Gemisches, auf.

In einer bevorzugten Ausführungsform wird ein Gemisch umfassend Kunststoff und mindestens einer pigmentierten Zellulose, welche zumindest Zellulose und mindestens ein Pigment umfasst, oder umfassend Kunststoff, mindestens einem Mineralstoff und mindestens einem Pigment, verwendet. Erfindungsgemäß kann jedes Pigment verwendet werden. Besonders bevorzugt wird ein Pigment in RAL 7023, RAL 7000, RAL 7001, RAL 7002, RAL 7003, RAL 7004, RAL 7005, RAL 7006, RAL 7008, RAL 7009, RAL 7010, RAL 7011, RAL 7012, RAL 7013, RAL 7015, RAL 7016, RAL 7021, RAL 7022, RAL 7024, RAL 7026, RAL 7030, RAL 7031, RAL 7032, RAL 7033, RAL 7034, RAL 7035, RAL 7036, RAL 7037, RAL 7038, RAL 7039, RAL 7040, RAL 7042, RAL 7043, RAL 7044, RAL 7045, RAL 7046, RAL 7047 und/oder RAL 7048 verwendet. Besonders bevorzugt dient das Pigment der Farbgebung, insbesondere einer grauen, mehr bevorzugt einer "betongrauen" Farbgebung der wenigstens einen, eine Außenseite des Extrusionsprofils bildende Profiloberfläche des Extrusionsprofils, insbesondere des Koextrusionsprofils oder des Monoextrusionsprofils, für ein Tür- und/oder Fensterrahmenteil. Die Verwendung eines Pigments in einem Grauton wird bevorzugt, da dessen Zugabe die Herstellung eines Extrusionsprofils für ein Tür- und/oder Fensterteil mit der Optik eines Extrusionsprofils aus Kunststoff-Recyclingmaterial, also eines Extrusionsprofils mit einer besonders umweltverträglichen und CO2-neutralen Optik, ermöglicht. Insbesondere bevorzugt ist die Verwendung eines Pigments in RAL 7023.

Eine besonders bevorzugte Ausführungsform betrifft ein Extrusionsprofil, insbesondere ein Koextrusionsprofil oder ein Monoextrusionsprofil, für ein Tür- und/oder Fensterrahmenteil, insbesondere einen Tür- und/oder Fensterrahmen, wobei wenigstens eine, eine Außenseite des Extrusionsprofils bildende Profiloberfläche aus einem Gemisch hergestellt ist, und wobei das Gemisch Kunststoff und mindestens eine RAL 7023 pigmentierte Zellulose umfasst, und wobei die mindestens eine RAL 7023 pigmentierte Zellulose einen Masseanteil zwischen 1 Gew.-% und 10 Gew.-% des Gemisches, insbesondere zwischen 3 Gew.-% und 7 Gew.-% des Gemisches, zwischen 4 Gew.-% und 6 Gew.-% des Gemisches oder etwa 5 Gew.-% des Gemisches aufweist.

In einer weiteren bevorzugten Ausführungsform versieht die mindestens eine pigmentierte Zellulose oder der mindestens eine Mineralstoff die wenigstens eine, eine Außenseite des Extrusionsprofils bildende Profiloberfläche des Extrusionsprofils, insbesondere des Koextrusionsprofils oder des Monoextrusionsprofils, für ein Tür- und/oder Fensterrahmenteil, mit einer haptisch fühlbaren und/oder optisch sichtbaren Oberfläche. Besonders bevorzugt versieht die mindestens eine pigmentierte Zellulose oder der mindestens eine Mineralstoff die wenigstens eine, eine Außenseite des Extrusionsprofils bildende Profiloberfläche mit einer betonartigen haptisch fühlbaren Oberfläche und/oder mit einer betonartigen optisch sichtbaren Oberfläche. Die Bereitstellung einer betonartigen haptisch fühlbaren und/oder betonartigen optisch sichtbaren Oberfläche wird bevorzugt, da auf diese Weise die Bereitstellung eines Extrusionsprofils mit der haptisch fühlbaren und/oder optisch sichtbaren Oberfläche eines Profils aus Kunststoff-Recyclingmaterials ermöglicht wird.

In einer bevorzugten Ausführungsform ist der Kunststoff des Gemisches ein Kunststoff-Recyclingmaterial, welches ein Alt-Fenster-Granulat oder ein Gemisch umfassend Kunststoff und mindestens einen Zusatzstoff umfasst, wobei das Alt-Fenster-Granulat oder das Gemisch umfassend Kunststoff und mindestens ein Zusatzstoff einen Masseanteil zwischen 70 Gew.-% und 100 Gew.-% des Gemisches, insbesondere zwischen 80 Gew.-% und 99 Gew.-% des Gemisches, zwischen 90 Gew.-% und 98 Gew.-% des Gemisches oder etwa 95 Gew.-% des Gemisches, aufweist.

"Alt-Fenster-Granulat" im Sinne dieser Erfindung bezeichnet ein Gemisch, welches aus alten, zuvor bereits verbauten Kunststoffrahmen besteht, die nach dem Einsatz erneut verwertet werden, und/oder aus Kunststoffmaterial besteht, welches im Rahmen des Verarbeitungsprozesses beispielsweise beim Fensterhersteller oder beim Ausbau der alten Fenster anfällt. Im Sinne dieser Erfindung können die alten, bereits verbauten Kunststoffrahmen und/oder das Kunststoffmaterial, welches im Rahmen des Verarbeitungsprozesses beispielsweise beim Fensterhersteller oder beim Ausbau der alten Fenster auftritt, bei der Verarbeitung zum Alt-Fenster-Granulat miteinander vermischt werden. Die alten, bereits verbauten Kunststoffrahmen und/oder das Kunststoffmaterial, welches im Rahmen des Verarbeitungsprozesses beispielsweise beim Fensterhersteller oder beim Ausbau der alten Fenster auftritt, können auch separat vorliegen.

Vorzugsweise wird im Sinne dieser Erfindung ein Kunststoff-Recyclingmaterial für ein erfindungsgemäßes Extrusionsprofil verwendet. Ein Extrusionsprofil aus einem Kunststoff-Recyclingmaterial ist insbesondere deshalb vorteilhaft, da dieses für die Umwelt von Vorteil ist und es sich hierbei um ein CO2-neutrales Produkt handelt. Durch die erfindungsgemäßen Maßnahmen wird es ermöglicht, ein Extrusionsprofil für Fenster- und/oder Türteile bereitzustellen, bei dem Kunststoff-Recyclingmaterial für nach außen sichtbare Profilflächen eingesetzt wird, sodass die Umweltverträglichkeit der erfindungsgemäßen Extrusionsprofile nach außen erkennbar ist.

In einer weiteren bevorzugten Ausführungsform ist das Alt-Fenster-Granulat ein Material, welches durch ein Verfahren umfassend folgender Schritte hergestellt wurde:
i) Zerkleinern von Alt-Fenster-Material, insbesondere wobei das Zerkleinern das Mahlen oder Schreddern von Alt-Fenster-Material umfasst;
ii) Separieren des zerkleinerten Alt-Fenster-Materials;
iii) Sortieren des separierten und zerkleinerten Alt-Fenster-Materials in verschiedene Farbtöne;
iv) Optional, pigmentieren des sortierten, separierten und zerkleinerten Alt-Fenster-Materials;
v) Reinigen des pigmentieren, sortierten, separierten und zerkleinerten Alt-Fenster-Materials, wobei das Reinigen vorzugsweise durch Schmelzfiltration erfolgt, und
vi) Granulieren des gereinigten, pigmentieren, sortierten, separierten und zerkleinerten Alt-Fenster-Materials.

In Schritt ii) des Verfahrens werden zum Separieren vorzugsweise physikalische Trennverfahren oder optisch-physikalische Trennverfahren, die dem Fachmann geläufig sind, eingesetzt, um verschiedene Bestandteile, beispielsweise verschiedene Metalle und Kunststoffe (wie EPDM, TPE, ASA, ABS) vom Fenster-PVC-Mahlgut zu separieren. In einer bevorzugten Ausführungsform wird beispielsweise Eisen von Nicht-Eisen-Bestandteilen separiert. In einer weiteren bevorzugten Ausführungsform werden keramische Bestandteile von Kunststoffen separiert.

In Schritt iii) des Verfahrens wird das separierte und zerkleinerte Alt-Fenster-Material vorzugsweise in möglichst reine Farbtöne sortiert. In einer bevorzugten Ausführungsform wird das separierte und zerkleinerte Alt-Fenster-Material in Weißtöne, Brauntöne und Bunttöne sortiert. Die Sortierung in Schritt iii) des Verfahrens erfolgt vorzugsweise durch optische Farbsortierungsmethoden, die dem Fachmann geläufig sind.

Das durch das Verfahren erzeugte Alt-Fenster-Granulat wird erfindungsgemäß weiterverarbeitet, um eine betonartige Optik und/oder die Optik eines Kunststoff-Recyclingmaterials zu erhalten. Die Betonoptik und/oder die Optik eines Kunststoff-Recyclingmaterials des Alt-Fenster-Granulats wird durch Zugabe von Zusätzen, wie beispielsweise der mindestens einen pigmentierten Zellulose oder des mindestens einen Mineralstoffs, in der Profilextrusion erzielt. Die Zugabe von Zusätzen, wie beispielsweise der mindestens einen pigmentierten Zellulose oder des mindestens einen Mineralstoffs, in der Profilextrusion erfolgt vorzugsweise über eine Dosierung in der Materialzuführung, beispielsweise in einem Trichter, des Extruders oder durch Beimischen der Zusätze in einem vorgelagerten Mischbereich.

Eine Pigmentierung bei der Alt-Fenster-Granulat-Herstellung vor der Schmelzfiltration kann problematisch sein, da dadurch die Korngröße des Pigments durch die Maschenweite des Schmelzfilters begrenzt wird. Daher erfolgt in einer besonders bevorzugten Ausführungsform die Pigmentierung bei der Alt-Fenster-Granulat-Herstellung erst nach der Schmelzfiltration.

In einer weiteren bevorzugten Ausführungsform umfasst das Gemisch Abfallprodukte oder Profilabschnitte, die bei der Extrusion eines Profils, beispielsweise eines Profils für ein Tür- und/oder ein Fensterrahmenteil, insbesondere einen Tür- und/oder einen Fensterrahmen, anfallen. Die Abfallprodukte oder Profilabschnitte werden erfindungsgemäß ähnlich dem Alt-Fenster-Granulat aufbereitet.

In einer weiteren bevorzugten Ausführungsform ist der mindestens eine Zusatzstoff des Gemisches umfassend Kunststoff und mindestens einen Zusatzstoff Calciumcarbonat, Titan(IV)-oxid, ein Modifizierungsmittel, wie beispielsweise Acrylat und/oder chloriertes Polyethylen (CPE), ein Stabilisator, eine Metallseife, ein Gleitmittel, ein Stearat, eine Fettsäure und/oder ein Pigment. Darüber hinaus kann der mindestens eine Zusatzstoff ein Flammhemmer, ein UV-Absorber, ein Treibmittel, ein Haftvermittler, ein Antistatika und/oder ein Fungizid sein.

In einer beispielhaften Weiterbildung wird der mindestens eine Zusatzstoff des Gemisches umfassend Kunststoff und mindestens einen Zusatzstoff ausgewählt aus der Gruppe bestehend aus:
(i) einem Mineralfüllstoff, wie beispielsweise Calciumcarbonat, Talk, Glimmer, Wollastonit, Silica, Kaolin, Magnesiumsilikat, Aluminiummagnesiumsilikat, Kaliumaluminiumsilikat, Mica, MicaCelia, Graphit, Schiefer, Glasfaser, oder Dolomit,
(ii) einem Mineralpigment, wie beispielsweise Titan(IV)-oxid (TiO2), Zirconium(II)-oxid (ZnO), Cer(III)-oxid (Ce2O3), Cadmiumsulfid (CdS), Calciumascorbat (CaAs), Zirconium(IV)-oxid (ZrO2), Eisen(I)oxid (Fe2O), Eisen(II)oxid (FeO), Eisen(III)oxid (Fe2O3), oder Siliciumdioxid (SiO2),
(iii) einer Polyesterifizierungspolymerverbindung,
(iv) einem Copolymer, wie beispielsweise einem Copolymer des Ethylens mit Vinylacetat (EVA),
(v) einem Gleitmittel, wie beispielsweise Glycerin, einem Fettalkohol, einer Fettsäure, einem Paraffinöl, einem Paraffin, Polyethylen, einem Fettsäureamid oder einem Silikonöl,
(vi) einem Polyvinylchlorid, wie beispielsweise K65-Polyvinylchlorid, K66-Polyvinylchlorid, K67-Polyvinylchlorid, K68-Polyvinylchlorid, oder K69-Polyvinylchlorid; und
(vii) einem Ester, wie beispielsweise Phthalsäureester (Phtalat), Diallylphthalat, Di-2-ethylhexylphthalat, Diisooctylphthalat, oder Tetrabromdioctylphthalat.

Im Sinne dieser Erfindung kann jeder handelsübliche Mineralfüllstoff verwendet werden. Vorzugsweise wird als Mineralfüllstoff Calciumcarbonat, Talk, Glimmer, Wollastonit, Silica, Kaolin, Magnesiumsilikat, Aluminiummagnesiumsilikat, Kaliumaluminiumsilikat, Mica, MicaCelia, Graphit, Schiefer, wie beispielsweise Schiefermehl, Schiefergrieß, oder Blähschiefer, Glasfaser oder Dolomit verwendet.

Im Sinne dieser Erfindung kann jedes handelsübliche Mineralpigment verwendet werden. Vorzugsweise wird das Mineralpigment ausgewählt aus Titan(IV)-oxid (TiO2), Zirconium(II)-oxid (ZnO), Cer(III)-oxid (Ce2O₃), Cadmiumsulfid (CdS), Calciumascorbat (CaAs), Zirconium(IV)-oxid (ZrO2), Eisen(I)oxid (Fe2O), Eisen(II)oxid (FeO), Eisen(III)oxid (Fe2O3), und Siliciumdioxid (SiO2).

Im Sinne dieser Erfindung kann jedes handelsübliche Modifizierungsmittel verwendet werden. Vorzugsweise wird das Modifizierungsmittel ausgewählt aus chlorierten Polyolefinen, wie chloriertem Polyethylen (CPE), Polymeren vom Acrylattyp, wie Homo- und Copolymere von Acrylsäurealkylestern, Acrylat, Ethylen-Propylen-Kautschuke, Schlagzähmodifizierungsmittel vom Butadientyp, wie AcrylnitrilButadien-Styrol (ABS) und/oder Methacrylsäuremethylester-Butadien-Styrol (MBS), und Copolymeren des Ethylens mit Vinylacetat (EVA).

Im Sinne dieser Erfindung kann jeder handelsübliche Stabilisator verwendet werden. Vorzugsweise wird der Stabilisator ausgewählt aus anorganischen Stabilisatoren auf Basis von Cd, Pb, Mg, Sn, Zn, Ca oder Ba, beispielsweise einer Metallseife, wie einer Bariumcadmiumseife, einer Calcium-Zinkseife oder einer Bleiseife, einem Bleisalz, einer Alkylzinnmerkaptoverbindung, einem Alkylzinncarboxylat, oder aus organischen Stabilisatoren wie einem epoxidierten Öl oder Ester, einem Diphenylthioharnstoff, Phenlindol, einem Phenol, einem Bis-Phenol, einem arylischen Phosphit, einem alkylischen Phosphit oder einem arylisch-alkylischen Phosphit.

Vorzugsweise wird eine neutrale oder eine basische Metallseife verwendet, wobei die Metallseife besonders bevorzugt ausgewählt wird aus einer Metallseife auf Basis von Cd, Pb, Mg, Sn, Zn, Ca und Ba, beispielsweise einer Bariumcadmiumseife, einer Calcium-Zinkseife und einer Bleiseife.

Im Sinne dieser Erfindung kann jedes Gleitmittel verwendet werden, insbesondere ein Gleitmittel wie Glycerin, einem Fettalkohol mit einer Kettenlänge von C12 bis C40, einem Monoester, einem Diester oder ein Triester natürlicher oder oxidierter Carbonsäuren mit einer Kettenlänge von C12 bis C40, einer Fettsäure mit einer Kettenlänge von C12 bis C40, einer substituierten Fettsäure, einer oxidierten Fettsäure, einem Paraffinöl, einem festen Paraffin, Polyethylen, einem oxidierten Polyethylen, einem Fettsäureamid und einem Silikonöl.

Bevorzugt werden Stearate der Metalle Cd, Pb, Mg, Sn, Zn, Ca oder Ba, Phtalsäureester langkettiger Alkohole oder Wachsester, wie beispielsweise C10 bis C40-Alkohole verestert mit C12 bis C36-Säuren, verwendet. Im Sinne dieser Erfindung kann jede Fettsäure, insbesondere Fettsäuren mit Kettenlängen von C12 bis C40, verwendet werden.

Vorzugsweise wird ein Pigment als Zusatzstoff verwendet, welches dem Gemisch eine gewünschte Farbgebung verleiht.

Im Sinne dieser Erfindung kann jede handelsübliche Polyesterifizierungspolymerverbindung verwendet werden. Auch kann im Sinne dieser Erfindung jedes handelsübliche Copolymer verwendet werden. Vorzugsweise wird ein Copolymer des Ethylens mit Vinylacetat (EVA) verwendet. Im Sinne dieser Erfindung kann zudem jedes handelsübliche Polyvinylchlorid verwendet werden. Vorzugsweise wird das Polyvinylchlorid als Trägermaterial verwendet, wobei das Polyvinylchlorid besonders bevorzugt K65-Polyvinylchlorid, K66-Polyvinylchlorid, K67-Polyvinylchlorid, K68-Polyvinylchlorid oder K69-Polyvinylchlorid ist.

Im Sinne dieser Erfindung kann jeder Ester verwendet werden. Vorzugsweise wird der Ester ausgewählt aus Phthalsäureester (Phtalat), Diallylphthalat, Di-2-ethylhexylphthalat, Diisooctylphthalat und Tetrabromdioctylphthalat. Vorzugsweise ist das Phthalt frei von Weichmachern.

In einer besonders bevorzugten Ausführungsform umfasst das Gemisch zumindest ein Mineralpigment, wie Titan(IV)-oxid (TiO2), einen Mineralfüllstoff, eine Polyesterifizierungspolymerverbindung, ein Polyvinylchlorid, und/oder ein Ester, beispielsweise Phthalsäureester (Phtalat).

In einer weiteren bevorzugten Ausführungsform umfasst das Gemisch Alt-Fenster-Granulat und Mahlgut. Besonders bevorzugt ist das Mahlgut ein nachindustrielles Material.

In einer weiteren bevorzugten Ausführungsform ist das Gemisch umfassend Kunststoff und mindestens einem Zusatzstoff ein "Dryblend"-Gemisch. Der Begriff "Dryblend" soll im Sinne dieser Anmeldung als ein Gemisch umfassend Kunststoff und mindestens einem Zusatzstoff verstanden werden. Besonders bevorzugt besteht das Dryblend-Gemisch aus mindestens einem Kunststoff, insbesondere Polyvinylchlorid-Kunststoff, Calciumcarbonat, Titan(IV)-oxid, mindestens einem Modifizierungsmittel, mindestens einem Stabilisator, mindestens einer Metallseife, mindestens einem Gleitmittel, mindestens einem Stearat, und/oder mindestens einer Fettsäure. Das Dryblend-Gemisch kann in einer weiter bevorzugten Ausführungsform mindestens ein Pigment enthalten. Durch die Zugabe mindestens eines Pigments wird eine gewünschte Farbgebung des Gemisches ermöglicht.

In einer weiteren bevorzugten Ausführungsform wird ein Gemisch verwendet, wobei das Gemisch Alt-Fenster-Granulat und Mahlgut umfasst, und wobei das Verhältnis Alt-Fenster-Granulat zu Mahlgut etwa 30-70% ist, oder etwa 40-60%, oder etwa 50-50%, oder etwa 60-40%, oder etwa 70-30%, oder etwa 80-20% ist.

In einer besonders bevorzugten Ausführungsform ist der Kunststoff ein Polyvinylchlorid-Kunststoff.

In einer bevorzugten Ausführungsform ist die Dosierung der mindestens einen pigmentierten Zellulose oder des mindestens einen Mineralstoffs durch Zugabe der mindestens einen pigmentierten Zellulose oder des mindestens einen Mineralstoffs zum Kunststoff über eine Dosiereinrichtung, beispielsweise eine volumetrische und/oder eine gravimetrische Dosiereinrichtung, erfolgt.

Die vorstehende Aufgabe wird in einem zweiten Aspekt gelöst, indem ein Verfahren zum Herstellen eines Extrusionsprofils bereitgestellt wird, bei dem mittels Extrusion, insbesondere mittels Koextrusion oder Monoextrusion, wenigstens eine, eine Außenseite des Extrusionsprofils bildende Profiloberfläche, aus einem Gemisch hergestellt wird, wobei das Gemisch Kunststoff und mindestens eine pigmentierte Zellulose oder mindestens einen Mineralstoff umfasst, und wobei die mindestens eine pigmentierte Zellulose oder der mindestens eine Mineralstoff einen Masseanteil zwischen 1.0 Gew.-% und 15.0 Gew.-% des Gemisches aufweist, insbesondere zwischen 2.0 Gew.-% und 10.0 Gew.-% des Gemisches aufweist.

Erfindungsgemäß erfolgt die Herstellung des Extrusionsprofils vorzugsweise über ein Koextrusionsverfahren, da durch Koextrusion die Verwendung der mindestens einen pigmentierten Zellulose oder des mindestens einen Mineralstoffs auf eine einzige Schicht der wenigstens einen, eine Außenseite des Extrusionsprofils bildende Profiloberfläche, begrenzt werden kann. Diese Schicht befindet sich vorzugsweise auf der Sichtfläche des Profils. Besonders bevorzugt wird eine Schicht der mindestens einen pigmentierten Zellulose oder des mindestens einen Mineralstoffs auf der Sichtfläche des Extrusionsprofils aufgebracht, wobei eine geringere Menge der mindestens einen pigmentierten Zellulose oder des mindestens einen Mineralstoffs benötigt wird. Hierdurch verringern sich die Kosten zur Herstellung eines erfindungsgemäßen Extrusionsprofils. Zudem erhöhen sich die Festigkeit des Profils im Schweißbereich, sowie die Festigkeit des Profils gegen Stoß und Bruch.

In einer weiteren bevorzugten Ausführungsform beinhaltet das Verfahren zum Herstellen eines Extrusionsprofils den Schritt der Dosierung der mindestens einen pigmentierten Zellulose oder des mindestens einen Mineralstoffs, wobei die Dosierung der mindestens einen pigmentierten Zellulose oder des mindestens einen Mineralstoffs durch Zugabe der mindestens einen pigmentierten Zellulose oder des mindestens einen Mineralstoffs zum Kunststoff über eine Dosiereinrichtung, beispielsweise eine volumetrische und/oder eine gravimetrische Dosiereinrichtung, erfolgt.

Die vorliegende Erfindung stellt auch einen Tür- und/oder Fensterrahmen sowie einen Tür- und/oder Fensterflügel bereit, der wenigstens einen Holm aufweist, der durch ein erfindungsgemäßes Verfahren hergestellt ist oder durch ein erfindungsgemäßes Profil gebildet ist.

Gemäß einem weiteren Aspekt der vorliegenden Erfindung, der mit den vorhergehenden Aspekten und beispielhaften Ausführungen kombinierbar ist, wird die vorstehende Aufgabe in einem weiteren Aspekt gelöst, indem die Verwendung von mindestens einer pigmentierte Zellulose oder mindestens eines Mineralstoff zur Farb- und Strukturgebung eines Extrusionsprofils bereitgestellt wird, wobei die Farb- und Strukturgebung eines Kunststoff-Recyclingmaterials bevorzugt wird.

Bevorzugte Ausführungen sind in den Unteransprüchen angegeben.

Im Folgenden werden weitere Eigenschaften, Merkmale und Vorteile der Erfindung mittels Beschreibung bevorzugter Ausführungen der Erfindung anhand der beiliegenden beispielhaften Zeichnungen deutlich, in denen zeigen:
- Figur 1: eine bespielhafte Ausführung eines erfindungsgemäßen Koextrusionsprofils in der Schnittansicht;
- Figur 2: eine bespielhafte Ausführung eines erfindungsgemäßen Koextrusionsprofils in der Schnittansicht;
- Figur 3: eine bespielhafte Ausführung eines erfindungsgemäßen Monoextrusionsprofils in der Schnittansicht;
- Figur 4: eine bespielhafte Ausführung eines erfindungsgemäßen Monoextrusionsprofils in der Schnittansicht;
- Figur 5: eine schematische Darstellung eines Ausschnitts einer Herstellungsanlage für ein erfindungsgemäßes Monoextrusionsprofil in der Seitenansicht;
- Figur 6: eine schematische Darstellung eines Ausschnitts einer Herstellungsanlage für ein erfindungsgemäßes Monoextrusionsprofil in der Draufsicht;
- Figur 7: eine schematische Darstellung eines Ausschnitts einer Herstellungsanlage für ein erfindungsgemäßes Koextrusionsprofil in der Seitenansicht;
- Figur 8: eine schematische Darstellung einer V-förmigen Anordnung der Extruder einer Herstellungsanlage eines erfindungsgemäßen Koextrusionsprofils in der Draufsicht;
- Figur 9: eine schematische Darstellung einer L-förmigen Anordnung der Extruder einer Herstellungsanlage eines erfindungsgemäßen Koextrusionsprofils in der Draufsicht; und
- Figur 10: eine schematische Darstellung einer Extrusionsanlage eines erfindungsgemäßen Extrusionsprofils mit zwei Werkzeugen und drei Extrudern in der Draufsicht.

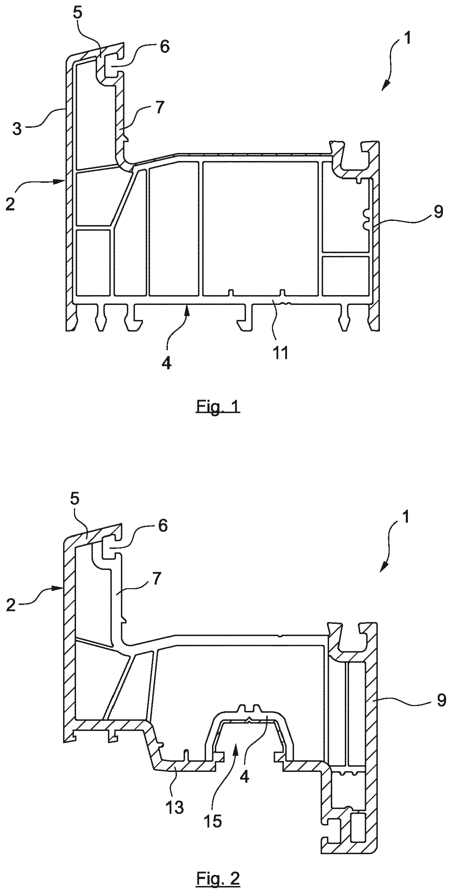

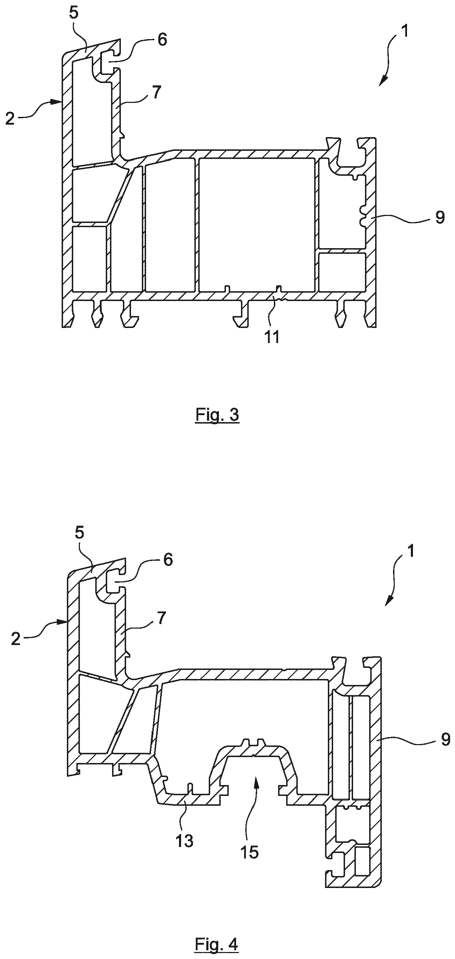

Unter Bezugnahme auf die Figuren 1 bis 4 werden Ausführungsbeispiele eines erfindungsgemäßen Extrusionsprofils, das im Allgemeinen mit der Bezugsziffer 1 versehen ist, beschrieben. In den beispielhaften Ausführungen erfindungsgemäßer Extrusionsprofile 1 der Figuren 1 bis 4 handelt es sich beispielhaft um Extrusionsprofile 1 aus Kunststoff, insbesondere PVC. Die Extrusion kann mittels Koextrusion (Fig. 1 und 2) oder mittels Monoextrusion (Fig. 3 und 4) erfolgen. Figur 1 und Figur 2 zeigen bespielhafte Ausführungen eines erfindungsgemäßen Extrusionsprofils 1 in der Schnittansicht. Die beispielhaften Ausführungen eines erfindungsgemäßen Extrusionsprofils 1 in Figur 1 und Figur 2 sind als Koextrusionsprofil ausgestaltet. In den Figuren 3 und 4 sind beispielhafte Ausführungen erfindungsgemäßer Extrusionsprofile 1 als Monoextrusionsprofile abgebildet.

Bezugnehmend auf Figur 1 wird ein mittels Koextrusion hergestelltes erfindungsgemäßes Extrusionsprofil 1 beschrieben, das beispielsweise wenigstens einen Horizontal- oder Vertikalholm eines feststehenden Tür- und/oder Fensterrahmenteils bildet. Eine Außenseite des Extrusionsprofils 1 bildende Profiloberfläche ist mit der Bezugsziffer 2 versehen. Diese wenigstens eine, eine Außenseite des Extrusionsprofils 1 bildende Profiloberfläche 2 ist aus einem Gemisch umfassend Kunststoff und mindestens einer pigmentierten Zellulose oder aus einem Gemisch umfassend Kunststoff und mindestens einem Mineralstoff hergestellt. Auf den Herstellungsprozess des Extrusionsprofils 1 wird später im Detail eingegangen. Die wenigstens eine, eine Außenseite des Extrusionsprofils 1 bildende Profiloberfläche 2 ist in den Figuren 1 und 2 zusätzlich durch eine Schraffierung gekennzeichnet. Die Profil oberfläche 2 umfasst insbesondere diejenigen Profilstege des Extrusionsprofils 1, welche nach außen hin sichtbar sind, insbesondere wenn das Extrusionsprofil 1 in das Tür- und/oder Fensterrahmenteil integriert ist. Zu den relevanten Profilstegen gehören beispielsweise ein der Umgebung und/oder dem Gebäudeäußeren zuzuwendender bzw. zugewandter Profilaußensteg 3, ein zu dem Profilaußensteg 3 geneigter Dichtsteg 5, welcher dazu vorgesehen ist, eine nicht dargestellte Verglasung abzudichten, ein im wesentlichen L-förmiger Verglasungssteg 7 zum Aufnehmen der Verglasung und ein an den Verglasungsstegs 7 anschließender Profilinnensteg 9, der dem Gebäudeinneren zuzuwenden bzw. zugewandt ist. Dadurch ist gewährleistet, dass das Extrusionsprofil 1 die gewünschte Optik, insbesondere Betonoptik, besitzt. Bei dem Verglasungssteg 7 kann es sich alternativ um einen Stützsteg handeln, wenn das Extrusionsprofil 1 für ein feststehendes Tür- und/oder Fensterrahmenteil eines Schiebesystems oder eines Hebeschiebesystems eingesetzt wird, wobei der Stützsteg 7 dann zum Abstützen bzw. Aufnehmen des relativ zu dem Tür- und/oder Fensterrahmenteil bewegbaren Tür- und/oder Fensterflügelteils dient.

Das Extrusionsprofil 1 umfasst ferner eine mit der Profiloberfläche 2 in einem Herstellungsschritt, insbesondere mittels Koextrusion, hergestellte Profilbasis 4. Die Profilbasis 4 kann aus einem beliebigen Kunststoff-Material hergestellt sein, beispielsweise aus einem Kunststoff-, insbesondere PVC-, Rohmaterial oder aus einem Kunststoff-Recyclingmaterial, wie einem Kunststoff-AFG. In Figur 1 ist zu erkennen, dass die Profilbasis 4, außer im Bereich eines die Unterseite des Tür- und/oder Fensterrahmenteils bildenden Bodenstegs 11, von außen nicht sichtbar ist. Die Profilbasis 4 ist, bis auf den Bodensteg 11, vollständig von der Profiloberfläche 2 umschlossen bzw. umrahmt.

Das Extrusionsprofil 1 besitzt in der Schnittansicht in Figur 1 eine im Wesentlichen L-förmige Außenkontur. Die einzelnen Profilstege der Profiloberfläche 2 sind dabei aus einem Stück mittels Extrusion hergestellt und weisen entlang der Extrusionsrichtung (in die Zeichenebene) eine im Wesentlichen konstante Wandstärke und/oder Querschnittsabmessung auf. Im Bereich des Dichtstegs 5 ist eine Dichtungsaufnahme 6 für eine nicht dargestellte Verglasungsdichtung zum Abdichten eines Dichtspalts zwischen der Verglasung und dem Dichtsteg 5 bzw. dem Verglasungssteg 7 vorgesehen.

Im grundsätzlichen Aufbau ist das Extrusionsprofil 1 gemäß Figur 2 analog zu dem Extrusionsprofil 1 gemäß Figur 1 aufgebaut bzw. hergestellt. Im Unterschied zu Figur 1 bildet das Extrusionsprofil 1 gemäß Figur 2 ein bewegbares, insbesondere translatorisch verschiebbares oder verschwenkbares, Tür- und/oder Fensterflügelteil. Auch das Extrusionsprofil 1 für den bewegbaren Tür- und/oder Fensterflügelteil gemäß Figur 2 ist mittels Koextrusion hergestellt und umfasst eine aus dem Gemisch umfassend Kunststoff und mindestens einer pigmentierten Zellulose oder aus einem Gemisch umfassend Kunststoff und mindestens einem Mineralstoff hergestellte Profiloberfläche 2 sowie eine aus einem beliebigen Kunststoff-Material hergestellte Profilbasis 4, wobei Profilbasis 4 und Profiloberfläche 2 in einem Herstellungsschritt mittels Koextrusion gefertigt werden. Im Unterschied zur Ausführung gemäß Figur 1 ist bei dem Extrusionsprofil 1 des Tür- und/oder Fensterflügelteils in Figur 2 der Verglasungssteg 7 wenigstens teilweise Teil der Profilbasis 4. Ein weiterer Unterschied besteht darin, dass ein einem feststehenden Tür- und/oder Fensterrahmenteil zuzuwendender Beschlagsteg 13, welcher die Unterseite des Extrusionprofils 1 bildet, Teil der Profiloberfläche 2 ist. Die Profiloberfläche 2, wie auch die Profilbasis 4, weisen eine Beschlagnut 15 für einen nicht dargestellten Beschlag des Tür- und/oder Fenstersystems auf.

Der Vorteil der bespielhaften Ausführung eines erfindungsgemäßen Extrusionsprofils gemäß Figur 1 und Figur 2 ist insbesondere, dass zum einen die wenigstens eine, eine Außenseite des Extrusionsprofils bildende Profiloberfläche 2, die vorzugsweise aus einem Gemisch umfassend Kunststoff und mindestens einer pigmentierten Zellulose oder aus einem Gemisch umfassend Kunststoff und mindestens einem Mineralstoff hergestellt ist, bezüglich der die Unterseite des Extrusionsprofils 1 bildende Profilbasis 4 formangepasst, sodass eine besonders kompakte Struktur gegeben ist. Des Weiteren kann die wenigstens eine, eine Außenseite des Extrusionsprofils bildende Profiloberfläche 2, so bemessen sein, dass diese im Wesentlichen ausschließlich den sichtbaren Bereich der entsprechenden Profilstege des Extrusionsprofils 1 bildet. Die Profilbasis 4 und die Profiloberfläche 2 können form- und/oder kraftschlüssig miteinander verbunden sein.

Im Vergleich zu Extrusionsprofilen, die im Stand der Technik bekannt sind, kann im erfindungsgemäßen Extrusionsprofil 1 die mindestens eine pigmentierten Zellulose oder der mindestens eine Mineralstoff auf eine einzige Schicht der wenigstens einen, eine Außenseite des Extrusionsprofils bildenden schraffiert dargestellten Profiloberfläche 2, welche aus dem Gemisch umfassend Kunststoff und mindestens einer pigmentierten Zellulose oder umfassend Kunststoff und mindestens einem Mineralstoff hergestellt ist, begrenzt werden. Diese Schicht umfassend Kunststoff und mindestens einer pigmentierten Zellulose oder umfassend Kunststoff und mindestens einem Mineralstoff befindet sich vorzugsweise auf der Sichtfläche des Profils, also an einer dem Gebäudeinnenraum abgewandten Außenseite. Trotz geringer verwendeter Menge der mindestens einen pigmentierten Zellulose oder des mindestens einen Mineralstoffs verleiht die Anbringung einer einzigen, dünnen Schicht der wenigstens einen, eine Außenseite des Extrusionsprofils bildenden schraffiert dargestellten Profiloberfläche 2, dem Kunststoff-Extrusionsprofil eine Betonoptik und/oder die Optik von Kunststoff-Recyclingmaterial.

Figur 3 und Figur 4 zeigen weitere bespielhafte Ausführungen eines erfindungsgemäßen Extrusionsprofils in der Schnittansicht, das im Allgemeinen mit der Bezugsziffer 1 versehen ist und in Figur 3 und Figur 4 als Monoextrusionsprofil ausgestaltet ist. Zur Vermeidung von Wiederholungen werden gleiche Komponenten mit der gleichen Begrifflichkeit wie in Figur 1 und 2 versehen.

Im Unterschied zu der bespielhaften Ausführung eines erfindungsgemäßen Extrusionsprofils gemäß Figur 1 und 2, ist bei den in Figur 3 und Figur 4 dargestellten Beispielen des erfindungsgemäßen Extrusionsprofils 1 das Extrusionsprofil 1 vollständig aus dem die Profiloberfläche 2 bildenden Gemisch umfassend Kunststoff und mindestens einer pigmentierten Zellulose oder umfassend Kunststoff und mindestens einem Mineralstoff hergestellt, nämlich in einem Herstellungsschritt mittels Monoextrusion. Dabei handelt es sich bei der Ausführungsform gemäß Figur 3 analog zu der Ausführungsform gemäß Figur 1 um ein Extrusionsprofil 1 für ein feststehendes Tür- und/oder Fensterrahmenteil und bei der Ausführungsform gemäß Figur 4 analog zu der Ausführungsform gemäß Figur 2 um ein Extrusionsprofil 1 für ein bewegbares Tür- und/oder Fensterflügelteil. Die in Figur 3 und Figur 4 dargestellten Beispiele des erfindungsgemäßen Extrusionsprofils 1 weisen somit nicht nur an der sichtbaren Außenseite des Extrusionprofils 1, sondern auch innenseitig dieselbe Betonoptik aufgrund des Zusatzes der mindestens einen pigmentierten Zellulose oder des mindestens einen Mineralstoffs auf.

Die bespielhafte Ausführung erfindungsgemäßer Extrusionsprofile 1 gemäß Figur 3 und 4 zeigt ein durchgängig schraffiertes Extrusionsprofil 1, da im Monoextrusionsprofil das Gemisch umfassend Kunststoff und mindestens einer pigmentierten Zellulose oder mindestens einem Mineralstoff durchgängig im einteiligen Extrusionsprofil 1 verwendet wird.

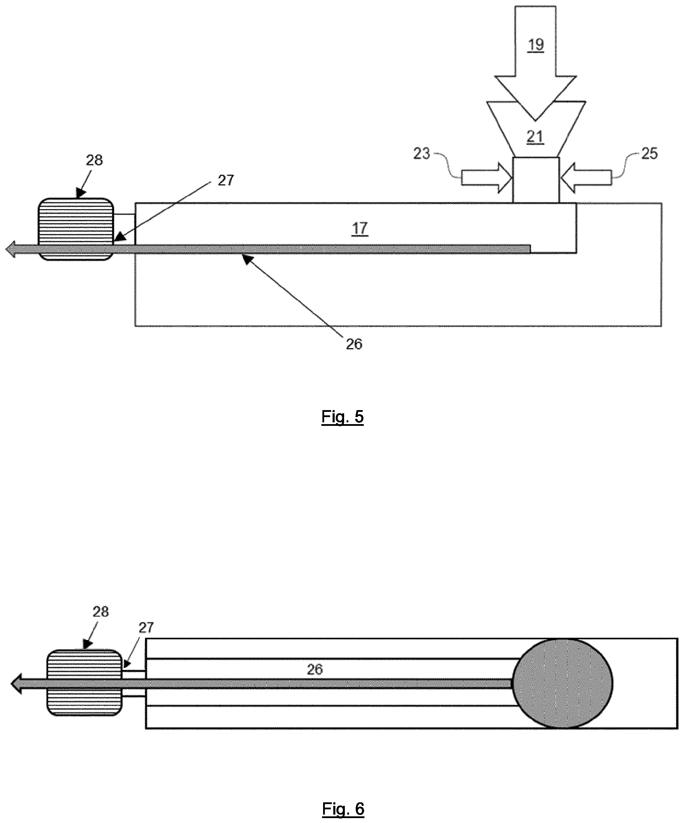

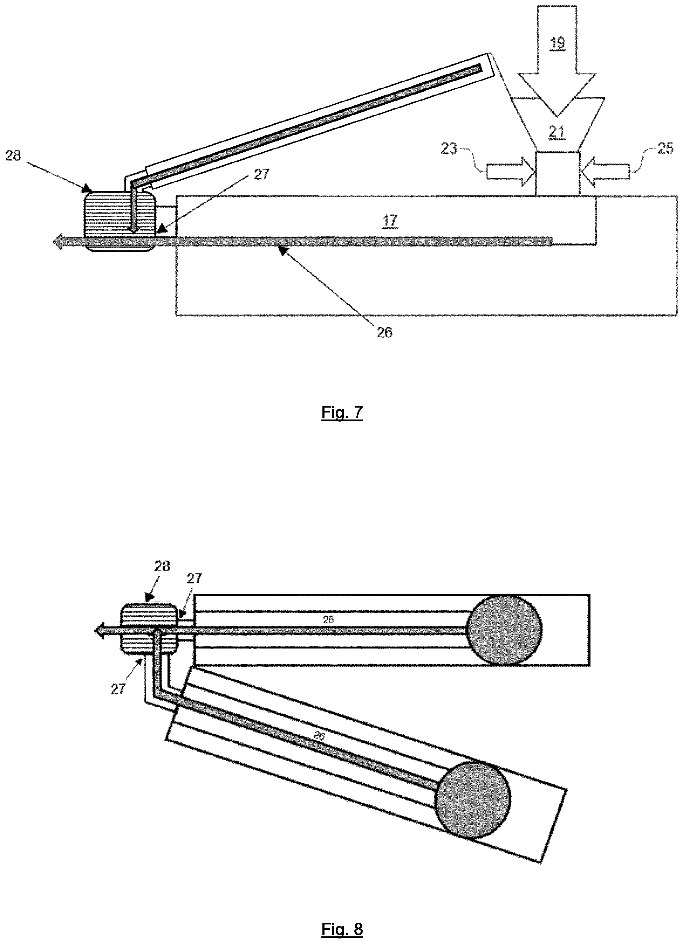

Unter Bezugnahme auf die Figuren 5 bis 10 werden Ausführungsbeispiele des Herstellungsprozesses zum Herstellen eines erfindungsgemäßen Extrusionsprofils beschrieben. In den beispielhaften Ausführungen des Herstellungsprozesses in den Figuren 5 bis 10 handelt es sich beispielhaft um Herstellungsverfahren von Extrusionsprofilen aus Kunststoff, insbesondere PVC. Die Extrusion kann mittels Monoextrusion (Fig. 5 und 6) oder mittels Koextrusion (Fig. 7 bis 10) erfolgen.

In Bezug auf Figur 5 ist der Herstellungsprozess zum Herstellen eines erfindungsgemäßen Extrusionsprofils 1 und insbesondere der Herstellungsschritt des Beimischens der mindestens einen pigmentierten Zellulose oder des mindestens einen Mineralstoffs im Extrusionsprozess schematisch dargestellt und wird im Folgenden näher erläutert: Figur 5 zeigt einen Ausschnitt einer Extrusionsanlage 17 zum Herstellen eines erfindungsgemäßen Extrusionsprofils 1 in der Seitenansicht. In einem Einlaufbereich 19, dargestellt mittels des Pfeils 19, wird ein Kunststoffmaterial zugefördert. Das Kunststoffmaterial wird dann erfindungsgemäß weiterverarbeitet, um eine betonartige Optik und/oder die Optik von Kunststoff-Recylingmaterial zu erhalten. Hierzu wird mittels eines Materialtrichters 21 das Kunststoffmaterial weitergeführt und erhält durch Zugabe der mindestens einen pigmentierten Zellulose oder des mindestens einen Mineralstoffs in der Profilextrusion die gewünschte Betonoptik und/oder die Optik von Kunststoff-Recylingmaterial. Erfindungsgemäß erfolgt eine dosierte Zugabe der mindestens einen pigmentierten Zellulose oder des mindestens einen Mineralstoffs zum Kunststoffmaterial mittels einer Dosiereinrichtung, welche schematisch durch die Pfeile mit den Bezugszeichen 23, 25 angedeutet ist. Die Dosiereinrichtung 23, 25 kann beispielsweise eine volumetrische und/oder eine gravimetrische Dosiereinrichtung sein.

Sofern die wenigstens eine, eine Außenseite des Extrusionsprofils bildende Profiloberfläche 2 aus einem Gemisch hergestellt ist, welches Kunststoff und mindestens eine pigmentierte Zellulose oder mindestens einen Mineralstoff umfasst, erfolgt die Dosierung der mindestens einen pigmentierten Zellulose oder des mindestens einen Mineralstoffs ausschließlich über die Dosiereinrichtung 23, 25. In einer bevorzugten Ausführungsform kann erfindungsgemäß die wenigstens eine, eine Außenseite des Extrusionsprofils 1 bildende Profiloberfläche 2 des Extrusionsprofils 1 für ein Tür- und/oder Fensterrahmenteil oder ein Tür- und/oder Fensterflügelteil, auch aus einem Gemisch umfassend Kunststoff, mindestens einem Mineralstoff und zusätzlich mindestens einem Pigment hergestellt werden. In dieser bevorzugten Ausführungsform erfolgt die Dosierung des mindestens einen Mineralstoffs über einen Dosiereinrichtungskanal 23, wohingegen die Dosierung des Pigments über einen anderen Dosiereinrichtungskanal 25 erfolgt. Die Dosiereinrichtung für beide Dosiereinrichtungskanäle 23, 25 kann beispielsweise eine volumetrische und/oder eine gravimetrische Dosiereinrichtung sein.

Erfindungsgemäß kann jedes Pigment über die Dosiereinrichtung 23 im Extrusionsprozess beigemischt werden. Besonders bevorzugt wird ein Pigment verwendet, welches eine "betongraue" Farbe und/oder die Farbe eines Kunststoff-Recyclingmaterials aufweist. Besonders bevorzugt wird über die Dosiereinrichtung 23, 25 ein Pigments in RAL 7023 im Extrusionsprozess beigemischt. Durch die dosierte Zugabe der mindestens einen pigmentierten Zellulose oder des mindestens einen Mineralstoffs, und optional durch die dosierte Zugabe des mindestens einen zusätzlichen Pigments, in der Profilextrusion mittels der Dosiereinrichtung 23, 25 kann der erwünschte Farbton genau gesteuert werden.

Figur 6 zeigt eine schematische Darstellung eines Ausschnitts einer Herstellungsanlage für ein erfindungsgemäßes Monoextrusionsprofil in der Draufsicht. Die Fließrichtung der Kunststoffschmelze ist mittels des grauen Pfeils, der mit der Bezugsziffer 26 versehen ist, angedeutet. Der Flansch zur Montage des Werkzeugs (Düse) an den Extruder ist mit der Kennziffer 27 gekennzeichnet. Das Extrusionswerkzeug (Düse), in welchem das Extrusionsprofil geformt wird, ist mit der Kennziffer 28 versehen und mittels einer Schraffierung hervorgehoben. Ein wesentlicher Vorteil des erfindungsgemäßen Herstellungsverfahrens eines Extrusionsprofils besteht darin, dass die mindestens eine pigmentierte Zellulose, der mindestens eine Mineralstoff und optional das mindestens eine zusätzliche Pigment auf eine einzige Schicht der wenigstens einen, eine Außenseite des Extrusionsprofils bildenden Profiloberfläche, begrenzt werden kann. Diese Schicht befindet sich vorzugsweise auf der Sichtfläche des Profils, also an einer dem Gebäudeinnenraum abgewandten Außenseite. Trotz geringer Menge der mindestens einen pigmentierten Zellulose, des mindestens einen Mineralstoffs und optional des mindestens einen zusätzlichen Pigments ermöglicht das erfindungsgemäße Verfahren es, dem Kunststoff-Extrusionsprofil aufgrund der schichtweisen Anbringung der mindestens einen pigmentierten Zellulose, des mindestens einen Mineralstoffs und optional des mindestens einen zusätzlichen Pigments eine Betonoptik und/oder die Optik eines Kunststoff-Recyclingmaterials zu verleihen. Hierdurch können die Kosten zur Herstellung eines erfindungsgemäßen Extrusionsprofils reduziert werden, die bei Verwendung einer größeren Menge der mindestens einen pigmentierten Zellulose, des mindestens einen Mineralstoffs und optional des mindestens einen zusätzlichen Pigments anfallen würden.

Grundsätzlich kann die Zugabe von Stoffen wie beispielsweise mindestens einer pigmentierten Zellulose oder mindestens eines Mineralstoffs zu einem Profil zu einer Reduktion der Festigkeit des Profils führen. Durch das erfindungsgemäße Herstellungsverfahren des Extrusionsprofils 1 wird die Anbringung einer dünnen Schicht der mindestens einen pigmentierten Zellulose oder des mindestens einen Mineralstoffs ermöglicht. Durch die Anbringung einer dünnen Schicht der mindestens einen pigmentierten Zellulose oder des mindestens einen Mineralstoffs, hat die Zugabe der mindestens einen pigmentierten Zellulose oder des mindestens einen Mineralstoffs zu dem Profil keinen merkenswerten festigkeitsreduzierenden Einfluss auf das Profil, da die Zugabe auf eine einzige sehr dünne Schicht reduziert werden kann. Daher weisen die erfindungsgemäß hergestellten Profile eine ausreichende Festigkeit sowohl im Schweißbereich, als auch eine ausreichende Festigkeit gegen Stoß und Bruch, auf.

In Bezug auf Figur 7 ist der Herstellungsprozess zum Herstellen eines erfindungsgemäßen Extrusionsprofils 1, insbesondere eines Koextrusionsprofils, sowie besonders der Herstellungsschritt des Beimischens der mindestens einen pigmentierten Zellulose oder des mindestens einen Mineralstoffs im Koextrusionsprozess schematisch dargestellt und wird im Folgenden näher erläutert. In Figur 7 werden gleiche Komponenten mit der gleichen Begrifflichkeit wie in den Figuren 1 bis 6 versehen. Figur 7 zeigt einen Ausschnitt einer Extrusionsanlage 17 zum Herstellen eines erfindungsgemäßen Extrusionsprofils 1 in der Seitenansicht. In einem Einlaufbereich 19, dargestellt mittels des Pfeils 19, wird ein Kunststoffmaterial zugefördert. Das Kunststoffmaterial wird dann erfindungsgemäß weiterverarbeitet, um eine betonartige Optik und/oder die Optik von Kunststoff-Recyclingmaterial zu erhalten. Hierzu wird mittels eines Materialtrichters 21 das Kunststoffmaterial als Kunststoffschmelze weitergeführt und durch Koextrusion erfolgt das Zusammenführen des Kunststoffmaterials mit Zusätzen, wie beispielsweise der mindestens einen pigmentierten Zellulose oder des mindestens einen Mineralstoffs. Die beiden Schmelzen werden von zwei separaten Extrusionsanlagen (Extrudern, 17) erzeugt und im Extrusionswerkzeug (Düse, 28) zu einem Extrusionsprofil zusammengeführt.

Grundsätzlich können zwei Extruder beispielsweise in einer V-Anordnung (seitlich versetzt übereinander) oder in einer Huckepackanordnung (direkt übereinander) angeordnet sein. Erfindungsgemäß erfolgt die Anordnung der beiden Extruder zueinander vorzugsweise so, dass über möglichst kurze Wege ein Einfach- oder Doppelstrangwerkzeug oder zwei Doppelstrangwerkzeuge so angeschlossen werden können, dass die beiden Schmelzen im Werkzeug, oder in den Werkzeugen, zu einem oder zwei Profilen geformt werden können.

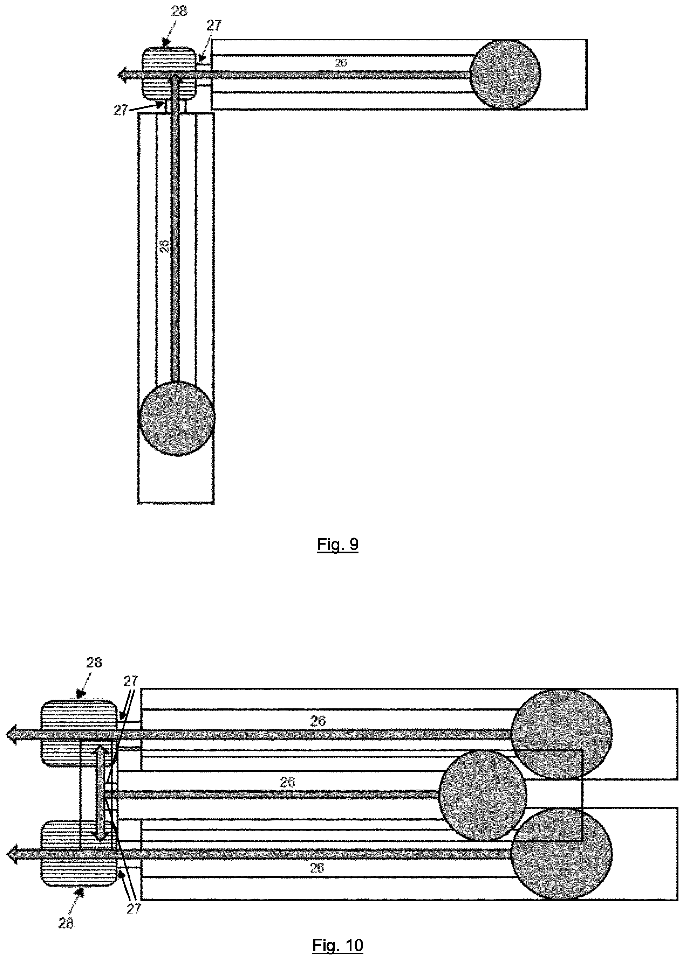

Unter Bezugnahme auf die Figuren 8 bis 10 werden Ausführungsbeispiele eines Herstellungsprozesses zum Herstellen eines erfindungsgemäßen Koxtrusionsprofils beschrieben. In den beispielhaften Ausführungen des Herstellungsprozesses in den Figuren 8 bis 10 handelt es sich um unterschiedliche Anordnungsmöglichkeiten verschiedener Extruder in einer Extrusionsanlage 17. Figur 8 zeigt eine V-förmige Anordnung zweier Extruder in einer Extrusionsanlage 17 für einen Herstellungsprozess zum Herstellen eines erfindungsgemäßen Extrusionsprofils 1 in der Draufsicht. In einer weiteren beispielhaften Ausführung eines Herstellungsprozesses zum Herstellen eines erfindungsgemäßen Koxtrusionsprofils ist die Anordnung zweier Extruder in einer Extrusionsanlage 17 für einen Herstellungsprozess zum Herstellen eines erfindungsgemäßen Extrusionsprofils 1 L-förmig angeordnet, wie in Figur 9 schematisch in der Draufsicht ersichtlich wird. Figur 10 zeigt eine schematische Darstellung einer Extrusionsanlage 17 mit zwei Werkzeugen und drei Extrudern in der Draufsicht.

Die in der vorstehenden Beschreibung, den Figuren und den Ansprüchen offenbarten Merkmale können sowohl einzeln als auch in beliebiger Kombination für die Realisierung der Erfindung in den verschiedenen Ausgestaltungen von Bedeutung sein.

### Bezugszeichenliste

- 1: Extrusionsprofil
- 2: Außenseite des Extrusionsprofils bildende Profiloberfläche
- 3: Profilaußensteg
- 4: Profilbasis
- 5: Dichtsteg
- 6: Dichtungsaufnahme
- 7: Verglasungssteg
- 9: Profilinnensteg
- 11: Bodensteg
- 13: Beschlagsteg
- 15: Beschlagnut
- 17: Extrusions-Anlage
- 19: Einlaufbereich
- 21: Materialtrichter
- 23: Dosiereinrichtung
- 25: Dosiereinrichtung
- 26: Fließrichtung der Kunststoffschmelze
- 27: Flansch zur Montage des Werkzeugs (Düse) an den Extruder
- 28: Extrusionswerkzeug (Düse)

## Patentansprüche

1. Extrusionsprofil (1), insbesondere Koextrusionsprofil oder Monoextrusionsprofil, für ein Fenster- und/oder Türteil, insbesondere ein Fenster- und/oder Türrahmenteil oder ein Fenster- und/oder Türflügelteil, wobei wenigstens eine, eine Außenseite des Extrusionsprofils (1) bildende Profiloberfläche (2) aus einem Gemisch hergestellt ist, wobei das Gemisch Kunststoff und mindestens eine pigmentierte Zellulose oder mindestens einen Mineralstoff umfasst, und wobei die mindestens eine pigmentierte Zellulose oder der mindestens eine Mineralstoff einen Masseanteil zwischen 1.0 Gew.-% und 15.0 Gew.-% des Gemisches, insbesondere zwischen 2.0 Gew.-% und 10.0 Gew.-% des Gemisches, aufweist.

2. Extrusionsprofil (1) nach Anspruch 1, wobei die pigmentierte Zellulose ein pigmentiertes Zellulosegemisch ist, welches zumindest Zellulose und mindestens ein Pigment umfasst, wobei die pigmentierte Zellulose einen Masseanteil zwischen 1 Gew.-% und 10 Gew.-% des Gemisches, insbesondere zwischen 3 Gew.-% und 7 Gew.-% des Gemisches, zwischen 4 Gew.-% und 6 Gew.-% des Gemisches oder etwa 5 Gew.-% des Gemisches, aufweist.

3. Extrusionsprofil (1) nach einem der vorstehenden Ansprüche, wobei der mindestens eine Mineralstoff Magnesiumsilikat, Aluminiummagnesiumsilikat, Kaliumaluminiumsilikat, Mica, MicaCelia, Graphit, Schiefer und/oder Glasfaser ist, insbesondere wobei der Mineralstoff Magnesiumsilikat ist.

4. Extrusionsprofil (1) nach einem der vorstehenden Ansprüche, wobei der Mineralstoff einen Masseanteil zwischen 1.0 Gew.-% und 10.0 Gew.-% des Gemisches aufweist, insbesondere zwischen 2.0 Gew.-% und 5.0 Gew.-% des Gemisches oder etwa 2.5 Gew.-% des Gemisches, aufweist.

5. Extrusionsprofil (1) nach einem der vorstehenden Ansprüche, wobei das Gemisch zusätzlich mindestens ein Pigment umfasst.

6. Extrusionsprofil (1) nach Anspruch 4 oder 5, wobei das Pigment ein Pigment in RAL 7023, RAL 7000, RAL 7001, RAL 7002, RAL 7003, RAL 7004, RAL 7005, RAL 7006, RAL 7008, RAL 7009, RAL 7010, RAL 7011, RAL 7012, RAL 7013, RAL 7015, RAL 7016, RAL 7021, RAL 7022, RAL 7024, RAL 7026, RAL 7030, RAL 7031, RAL 7032, RAL 7033, RAL 7034, RAL 7035, RAL 7036, RAL 7037, RAL 7038, RAL 7039, RAL 7040, RAL 7042, RAL 7043, RAL 7044, RAL 7045, RAL 7046, RAL 7047 und/oder RAL 7048 ist.

7. Extrusionsprofil (1) nach einem der vorstehenden Ansprüche, wobei der Kunststoff ein Kunststoff-Recyclingmaterial ist, welches ein Alt-Fenster-Granulat oder ein Gemisch umfassend Kunststoff und mindestens einen Zusatzstoff umfasst, wobei das Alt-Fenster-Granulat oder das Gemisch umfassend Kunststoff und mindestens einen Zusatzstoff einen Masseanteil zwischen 70 Gew.-% und 100 Gew.-% des Gemisches, insbesondere zwischen 80 Gew.-% und 99 Gew.-% des Gemisches, zwischen 90 Gew.-% und 98 Gew.-% des Gemisches oder etwa 95 Gew.-% des Gemisches, aufweist.

8. Extrusionsprofil (1) nach Anspruch 7, wobei der mindestens eine Zusatzstoff Calciumcarbonat, Titan(IV)-oxid, ein Modifizierungsmittel, wie beispielsweise Acrylat und/oder chloriertes Polyethylen (CPE), ein Stabilisator, eine Metallseife, ein Gleitmittel, ein Stearat, eine Fettsäure und/oder ein Pigment ist.

9. Extrusionsprofil (1) nach einem der vorstehenden Ansprüche, wobei der Kunststoff ein Polyvinylchlorid-Kunststoff ist.

10. Extrusionsprofil (1) nach einem der vorstehenden Ansprüche, wobei die Dosierung der mindestens einen pigmentierten Zellulose oder des mindestens einen Mineralstoffs durch Zugabe der mindestens einen pigmentierten Zellulose oder des mindestens eines Mineralstoffs zum Kunststoff über eine Dosiereinrichtung (23, 25), beispielsweise eine volumetrische und/oder eine gravimetrische Dosiereinrichtung, erfolgt ist.

11. Verfahren zum Herstellen eines insbesondere nach einem der vorstehenden Ansprüche ausgebildeten Extrusionsprofils (1), bei dem mittels Extrusion, insbesondere mittels Koextrusion oder Monoextrusion, wenigstens eine, eine Außenseite des Extrusionsprofils (1) bildende Profiloberfläche (2) aus einem Gemisch hergestellt ist, wobei das Gemisch Kunststoff und mindestens eine pigmentierte Zellulose oder mindestens einen Mineralstoff umfasst, und wobei die mindestens eine pigmentierte Zellulose oder der mindestens eine Mineralstoff einen Masseanteil zwischen 1.0 Gew.-% und 15.0 Gew.-% des Gemisches, insbesondere zwischen 2.0 Gew.-% und 10.0 Gew.-% des Gemisches, aufweist.

12. Verfahren zum Herstellen eines insbesondere nach Anspruch 10 ausgebildeten Extrusionsprofils (1), wobei die Dosierung der mindestens einen pigmentierten Zellulose oder des mindestens einen Mineralstoffs durch Zugabe der mindestens einen pigmentierten Zellulose oder des mindestens einen Mineralstoffs zum Kunststoff über eine Dosiereinrichtung (23, 25), beispielsweise eine volumetrische und/oder eine gravimetrische Dosiereinrichtung, erfolgt.
